Europäisches Patentamt

European Patent Office

Office européen des brevets

(11) Publication number: **0 393 681**
**A1**

## EUROPEAN PATENT APPLICATION

(21) Application number: **90107461.7**

(22) Date of filing: **19.04.90**

(51) Int. Cl.⁵: **C04B 28/02**

(30) Priority: **20.04.89 IT 2020689**

(43) Date of publication of application:
**24.10.90 Bulletin 90/43**

(84) Designated Contracting States:
**AT BE CH DE DK ES FR GB GR LI NL SE**

(71) Applicant: TECNICHE INDUSTRIALI S.r.l.
84, Via Zorutti Campoformido
Udine(IT)

(72) Inventor: **Contento, Maria Pia**
**506, V. le Venezia**
**I-33100 Udine(IT)**
Inventor: **Cioffi, Flavio**
**506, V. le Venezia**
**I-33100 Udine(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**D-8000 München 40(DE)**

(54) **Heat-insulating, water-repellant and flame-retarded mortars having a high ratio of mechanical properties to specific gravity.**

(57) Described are heat-insulating, water-repellant and flame-retarded mortars capable of yielding products with a high ratio of mechanical properties to specific gravity, comprising:

(a) a hydraulic binder;

(b) at least one inert inorganic additive for lightening purposes ($b_1$), and at least one inert inorganic reinforcing agent having a low specific gravity ($b_2$);

(c) at least one aerating agent; and

(d) at least one water-proofing agent.

EP 0 393 681 A1

## HEAT-INSULATING, WATER-REPELLANT AND FLAME-RETARDED MORTARS HAVING A HIGH RATIO OF MECHANICAL PROPERTIES TO SPECIFIC GRAVITY

The present invention relates to heat-insulating, water-repellant and flame-retarded mortars capable of yielding products endowed with a high ratio of mechanical properties to specific gravity.

The term "mechanical properties", as used herein is to denote particularly the compression strength and the bending strength of the articles (bodies) obtainable from the mortars according to the present invention.

After the years of the energy crises, the need to save energy appeared above all when people became clearly aware of the fact that petroleum, as well as natural gas, are not inexhaustible and are subject to the monopoly of a limited number of producer countries.

The problem of energy saving to a considerable extent concerned those higher industrialized nations in which the consumption of petroleum and natural gas had been very high in the past, also because one of the major portions of energy had been consumed in the heating of buildings.

In order to obviate the so-called "energy waste", studies were started, aiming at limiting the energy consumption, and several countries also tried to find a solution to said problem by resorting to new regulations.

For example, in Italy, Law 373 of June 30,1976 relevant to the containment of energy consumption for heating purposes was the immediate answer to this problem, and the purpose of said law was to reach a progressive decrease in energy consumption by causing buildings to be planned and built according to concepts more consistent with the new situation.

However, Law 373 only relates to the dispersion of heat towards the external environment in the case of steady state temperatures. In this particular case, the limitation of the amount of dispersed heat could also be accomplished by means of the use of thin and highly heat-insulating structures, but the employment of such a kind of structures in a building is absolutely uncomfortable since the temperatures of the external environment are not constant, but can undergo considerable changes even on the same day: such temperature changes, even if mitigated, are immediately felt by the human body.

This drawback could be overcome by resorting to large-weight, high-thickness structures, but such a contrivance would cause an increase in the consumption of raw materials, and therefore in building costs.

The problem has been solved by using structures having standard thicknesses, and in which the heat-insulating effect due to their high-thermal-inertness is secured by plasters for indoor and/or outdoor use, obtained from cement mortars having a low heat conductivity.

A novel mortar has now been found which, besides being endowed with extremely satisfactory heat-insulating characteristics, is water-repellant and flame-retarded and shows very good mechanical properties, in particular relative to its specific gravity.

In particular, it has been found that when a specific combination of light-weight, inert inorganic reinforcing additives is combined with a hydraulic binder, a setting composition can be obtained, which can be used in the preparation of heat-insulating coatings for indoor or outdoor use in dwelling and/or industrial buildings, as well as in the preparation of structural elements such as floor slabs, walls, components for floating marine structures, etc.

Therefore, one object of the present invention are heat-insulating, water-repellant and flame-retarded mortars capable of yielding products endowed with a high ratio of mechanical properties to specific gravity, comprising:

(a) a hydraulic binder;

(b) at least one inert inorganic additive for lightening purposes ($b_1$), and at least one inert inorganic reinforcing agent having a low specific gravity ($b_2$);

(c) at least one aerating agent; and

(d) at least one water-proofing agent.

Preferred mortars according to the present invention are those which contain:

(a) from 20 to 70% by weight of hydraulic binder;

(b) from 20 to 70% by weight of a mixture of at least one inert inorganic additive for lightening purposes ($b_1$), and at least one inert inorganic reinforcing agent having a low specific gravity ($b_2$);

(c) from 0.05 to 5% by weight of at least one aerating agent; and

(d) from 0.5 to 10% by weight of at least one water-proofing agent,

wherein components (a) to (d) add up to 100.

Even more preferred are mortars containing:

(a) from 30 to 55% by weight of hydraulic binder;

(b) from 35 to 60% by weight of a mixture of at least one inert inorganic additive for lightening purposes ($b_1$), and at least one inert inorganic reinforcing agent having a low specific gravity ($b_2$);

(c) from 0.05 to 5% by weight of at least one aerating agent; and

(d) from 0.5 to 10% by weight of at least one water-proofing agent,

components (a) to (d) adding up to 100 percent.

In order to obtain mortars according to the instant invention which are capable of yielding products characterized by a high ratio of their mechanical properties to their specific gravity, the inert additives/agents listed under (b) preferably are used in weight ratios $b_1/b_2$ within the range of from 1/100 to 10/1, and particularly of from 1/20 to 1/1.

To the mortars according to the present invention water can be added for the purpose of preparing flowing, setting compositions to be treated according to conventional techniques of the art, said water being preferably added in amounts of from 30 to 200% by weight, relative to the weight of the dry mortar.

In the mortars according to the present invention any hydraulic binders can be used, although cement, lime, gypsum, light ash, a "fly ash" as disclosed in US-A-4,624,711 and 4,210,457, etc., or mixtures thereof, are preferred. Cement of the Portland type, of the pozzuolana type, magnesium cement, aluminous cement, etc. (as described in Kirk-Othmers's "Encyclopaedia of Chemical Technology", 2nd Edition, vol. 4, page 684) are particularly preferred.

A preferred inert inorganic additive $(b_1)$ for lightening purposes is finely granular, optionally hydrolysed perlite, which is a form of silica corresponding to an amorphous phase intermediate of quartz B and cristobalite B and may be obtained by heating quartz in the presence of CaO.

A preferred low-specific-gravity, inert inorganic reinforcing agent $(b_2)$ is Fillite®, which is composed of hollow pearls of alumina silicate of glass-like structure, having an average particle size of from about 5 to about 300 $\mu$m.

As alternative agents, mixtures containing Fillite® and other low-specific-gravity reinforcing materials, such as expanded clay, diatomite, vermiculite, etc., can also be used.

The aerating and water-proofing agents are products known in the art and are already being used in the preparation of low-density concretes. The aerating agents (c) generally are selected from vegetable and/or animal proteins such as soy lecithin, calcium caseinate, etc., and saponified resins of vegetable origin, such as "Vinsol ® NVX" (a product of Hercules, Wilmington, Delaware). The water-proofing agents (d) preferably are selected from esters of fatty acids, such as zinc stearate, and bituminous derivatives, such as tar-based paints.

In the mortars according to the present invention, further additives can be incorporated, which are known in the art and are commonly used in the preparation of concretes and mortars, such as setting accelerators, resins, such as epoxy and/or acetovinylic resins, organic fibers, such as acrylonitrile fibers, inorganic fibers, such as asbestos fibers, dyes and rheology regulators, such as the cellulose derivatives or synthetic silica, such as "Aerosil ® COX 64" by Degussa, etc.

The mortars according to the instant invention, after having been mixed with water and after subsequent curing and drying, result in products which generally have a specific gravity of from 200 to 700 $kg/m^3$ and show a compression strength of from 10 to 100 $kg/cm^2$, particularly of from 20 to 50 $kg/cm^2$, and a bending strength of from 2 to 20 $kg/cm^2$, particularly of from 3 to 10 $kg/cm^2$, according to the modalities prescribed by the Ministry Decree of June 3, 1968 "Nuove norme sui requisiti di accettazione e modalità di prova dei cementi [New regulations on the requisites of acceptance and modalities of cement testing]".

After having been kept in water for 90 days said manufactured articles usually show a weight increase lower than 40% and fall within the definition of "non-combustible materials" and of "non-flame-propagating materials" when submitted to the test for non-combustibility according to IMO Resolution A 472 (XII).

Finally, the mortars according to the present invention usually are characterized by a heat conductivity, as measured according to DIN 4108, of from 0.05 to 0.12 cal/h.m.$^\circ$C.

The following non-limitative examples are given in order to illustrate the instant invention.

### EXAMPLE 1

A mortar of the following composition was prepared:

(i) 200 parts by weight of cement of Portland 425 grade;

(ii) 200 parts by weight of Fillite ®;

(iii) 27 parts by weight of perlite;

(iv) 6 parts by weight of zinc stearate;

(v) 1 part by weight of calcium caseinate;

(vi) 1 part by weight of methyl cellulose.

The mortar was mixed with 250 parts of water for about 5 minutes in a concrete mixer.

Five specimen were prepared for the determination of bending strength and compression strength. Said specimen were cured for 28 days under standard conditions.

After oven-drying at 75$^\circ$C for 8 hours, the specimen had an average specific gravity of 400 $kg/m^3$ and were characterized by a bending strength of 5 $kg/cm^2$ and a compression strength of 30 $kg/cm^2$.

The heat conductivity of the mortar was 0.06 cal/h.m.°C.


### EXAMPLE 2

A mortar having the following composition was prepared:

(i) 250 parts by weight of cement of Portland 425 grade;

(ii) 200 parts by weight of Fillite ®;

(iii) 20 parts by weight of perlite;

(iv) 6 parts by weight of zinc stearate;

(v) 1 part by weight of calcium caseinate;

(vi) 1 part by weight of methyl cellulose.

The mortar was mixed with 250 parts of water for about 5 minutes in a concrete mixer.

With the final mixture, 5 specimen were prepared for the determination of bending strength and compression strength. Said specimen were caused to cure for 28 days under standard conditions.

After oven-drying at 75°C for 8 hours, the specimen had an average specific gravity of 500 $kg/m^3$ and were characterized by a bending strength of 7 $kg/cm^2$ and a compression strength of 45 $kg/cm^2$.


## Claims

1. Heat-insulating, water-repellant and flame-retarded mortars, comprising:

(a) a hydraulic binder;

(b) at least one inert inorganic additive for lightening purposes ($b_1$), and at least one inert inorganic reinforcing agent having a low specific gravity ($b_2$);

(c) at least one aerating agent; and

(d) at least one water-proofing agent.

2. Mortars according to claim 1, comprising:

(a) from 20 to 70%, particularly 30 to 55% by weight of hydraulic binder;

(b) from 20 to 70%, particularly 35 to 60% by weight of a mixture of at least one inert inorganic additive for lightening purposes ($b_1$), and at least one inert inorganic reinforcing agent having a low specific gravity ($b_2$);

(c) from 0.05 to 5% by weight of at least one aerating agent; and

(d) from 0.5 to 10% by weight of at least one water-proofing agent.

3. Mortars according to any one of the preceding claims, wherein the inert additives/agents (b) are present in weight ratios $b_1/b_2$ of from 1/100 to 10/1, particularly from 1/20 to 1/1.

4. Mortars according to any one of the preceding claims wherein the hydraulic binder is selected from cement, lime, gypsum, light ash, "fly ash" and mixtures thereof.

5. Mortars according to any one of the preceding claims, wherein the inert inorganic additive ($b_1$) is perlite.

6. Mortars according to any one of the preceding claims, wherein the low-specific-gravity reinforcing agent ($b_2$) is Fillite ®.

7. Mortars according to any one of the preceding claims, wherein the aerating agent (c) is selected from vegetable and/or animal proteins and saponified resins of vegetable origin.

8. Mortars according to any one of the preceding claims, wherein the water-proofing agent (d) is selected from esters of fatty acids and bituminous derivatives.

9. Set compositions, obtainable by mixing the mortars according to any one of the preceding claims with water and subsequently causing said mortars to dry, said water being added in an amount of from 30 to 200% by weight, based on the weight of the dry mortar.

European Patent Office

**EUROPEAN SEARCH REPORT**

Application number

| | DOCUMENTS CONSIDERED TO BE RELEVANT | | EP 90107461.7 |

| Category | Citation of document with indication, where appropriate, of relevant passages | Relevant to claim | CLASSIFICATION OF THE APPLICATION (Int Cl⁵) |
|---|---|---|---|
| X | DE - A - 2 341 684 (ALPINE BAUGESELLSCHAFT NACHFLG. OHG.) * Claims * -- | 1,9 | C 04 B 28/02 |
| X | US - A - 4 293 341 (DUDLEY et al.) * Claims * -- | 1,9 | |
| D,X | US - A - 4 210 457 (DODSON et al.) * Claims * -- | 1-5,9 | |
| P,X | EP - A2 - 0 335 405 (TECNICHE INDUSTRIALI S.R.L.) * Totality * ---- | 1-4,8, 9 | |

TECHNICAL FIELDS
SEARCHED (Int Cl⁵)

C 04 B

The present search report has been drawn up for all claims

| Place of search | Date of completion of the search | Examiner |
|---|---|---|
| VIENNA | 26-07-1990 | BECK |